# EUROPÄISCHE PATENTSCHRIFT

(11) **EP 1 193 221 B1**
(45) Veröffentlichungstag und Bekanntmachung des Hinweises auf die Patenterteilung: **19.01.2005**
(21) Anmeldenummer: 01122273.4
(22) Anmeldetag: 18.09.2001
(51) Int. Cl.: C02F 3/08, B01F 3/04

(54) **Scheibentauchkörper**
Disc contact aerator
Disque immergé pour l'aération

(30) Priorität: 02.10.2000 DE 10048892
(43) Veröffentlichungstag der Anmeldung: 03.04.2002
(73) Patentinhaber: PMT Plastik-Metall-Technologie GmbH, 74564 Crailsheim (DE)
(72) Erfinder: Schmitt, Thomas, 74592 Kirchberg an der Jagst (DE)
(74) Vertreter: Schlimme, Wolfram, Dr.-Ing.

(56) Entgegenhaltungen:
- WO-A-01/66473
- WO-A-98/11025
- DE-A- 3 532 948
- US-A- 4 137 172
- US-A- 5 425 874

## Beschreibung

Die Erfindung betrifft einen Scheibentauchkörper mit einer Welle und einer Vielzahl von auf der Welle angeordneten, aus teilkreisförmigen Scheibenelementen gebildeten kreisförmigen Scheiben, wobei Zugstangen vorgesehen sind, die die Scheiben in achsparalleler Richtung durchdringen und gegeneinander verspannen, wobei zwischen einander in Axialrichtung des Scheibentauchkörpers benachbarten Scheiben Abstandhalter vorgesehen sind, die an einer ersten Seite mit einem Steckzapfen versehen sind und die an einer von dieser ersten Seite abgewandten zweiten Seite eine Aufnahmebuchse zur Aufnahme eines Steckzapfens eines in Axialrichtung benachbarten Abstandhalters aufweisen und wobei durch die Abstandhalter die Zugstangen hindurchführbar sind.

Ein derartiger Scheibentauchkörper ist beispielsweise aus der DE 196 52 156 C1 bekannt. Die Scheiben dieses Scheibentauchkörpers bestehen jeweils aus tortenstückartigen Sektorabschnitten, die an ihren sich in Radialrichtung erstreckenden Kanten in Abstandhalter eingeklemmt sind. Die einzelnen Segmente der übereinander angeordneten Scheiben liegen derart übereinander, daß die sich radial erstreckenden Kanten der einzelnen Sektorabschnitte aller Scheiben in Vertikalrichtung zueinander ausgerichtet sind. Zugstangen sind durch die Abstandhalter parallel zur Achse des Scheibentauchkörpers hindurchgesteckt und befinden sich daher in den Zwischenräumen zwischen den sich radial erstreckenden Kanten zweier in Umfangsrichtung benachbarter Sektorabschnitte. Auf diese Weise soll es möglich sein, einzelne Sektorabschnitte auswechseln zu können, ohne die Zugstangen entfernen zu müssen.

Bei diesem bekannten Scheibentauchkörper müssen, wie auch bei anderen aus dem Stand der Technik bekannten Scheibentauchkörpern, die Zugstangen bereits zu Beginn der Montage des gesamten Scheibentauchkörpers vorgesehen werden, um eine definierte Ausrichtung der Sektorabschnitte zueinander zu gewährleisten und um zu vermeiden, daß sich die Sektorabschnitte einer Scheibe so zueinander verkanten, daß die Scheibe nicht eben ist. Dies bedeutet wiederum, daß die Montagearbeiter, die den Scheibentauchkörper aus den einzelnen Sektorabschnitten zusammensetzen müssen, einer nicht unerheblichen Gefährdung durch die Spitzen der Stangen ausgesetzt sind.

Aufgabe der vorliegenden Erfindung ist es, einen gattungsgemäßen Scheibentauchkörper anzugeben, der eine einfachere und sichere Montage gestattet und trotzdem eine hohe Stabilität in sich aufweist.

Diese Aufgabe wird gemäß Patentanspruch 1 dadurch gelöst, daß die teilkreisförmigen Scheibenelemente einen Bogenwinkel α mit 0°< α ≤ 180° aufweisen, daß die Scheibenelemente von einander in Axialrichtung benachbarten Scheiben jeweils um einen Winkel β mit 0° < β < α in Umfangsrichtung versetzt zueinander angeordnet sind und daß die Scheibenelemente Montagelöcher aufweisen, durch die jeweils ein Steckzapfen eines Abstandhalters hindurchführbar ist.

Dieser erfindungsgemäße Scheibentauchkörper läßt sich auf einfache und schnelle Weise ohne die Zugstangen montieren, da die einzelnen teilkreisförmigen Scheibenelemente mittels der Abstandhalter miteinander verbunden werden und da aufgrund der winkelversetzten Montage der Scheibenelemente ein stabiles Scheibenpaket entsteht. Erst am Ende der Montage der einzelnen Scheibenelemente werden die Zugstangen durch die Abstandhalter und damit durch die einzelnen Scheibenelemente hindurchgeführt und das Scheibenpaket wird verspannt.

Vorzugsweise sind die Scheibenelemente halbkreisförmig. Diese halbkreisförmige Gestaltung reduziert einerseits die Montagezeit, da nur eine begrenzte Anzahl von Scheibenelementen zu montieren ist, und ermöglicht andererseits den einfachen Transport der einzelnen Teile des Scheibentauchkörpers, da die einzelnen Scheibenelemente nur das halbe Gewicht einer gesamten Scheibe ausmachen und beim vertikalen Transport der Einzelteile nur die halbe Höhe gegenüber einer gesamten Scheibe einnehmen.

Ein bevorzugter Abstandhalter für einen erfindungsgemäßen Scheibentauchkörper mit einem Distanzhalteabschnitt, einem an einer ersten Seite des Distanzhalteabschnitts ausgebildeten Vorsprung, der den Steckzapfen bildet und einer an der von der ersten Seite abgewandten zweiten Seite des Distanzhalteabschnitts ausgebildeten Bohrung, die die Aufnahmebuchse bildet, wobei die Bohrung im Distanzhalteabschnitt in eine den Steckzapfen axial durchdringende Bohrung übergeht, so daß eine Durchgangsbohrung durch den Abstandhalter geschaffen ist, ist dadurch gekennzeichnet, daß der Steckzapfen mit in Radialrichtung federnden Laschen versehen ist. Diese Ausgestaltung eines Abstandhalters ermöglicht durch die radial federnden Laschen des Steckzapfens eine Klemmbefestigung im Reibschluß zweier zusammengesteckter Abstandhalter, wodurch die Montage des Scheibentauchkörpers weiter erleichtert wird, da die bereits zusammengesteckten Abstandhalter sicher in ihrer Position verbleiben, auch wenn weitere Scheibenelemente auf sie aufgesetzt werden.

Vorzugsweise sind die federnden Laschen im Bereich des Umfangs des Steckzapfens mit einem radial nach außen hervorstehenden wulstartigen Randabschnitt versehen. Dieser Randabschnitt erhöht die radial wirkende Druckkraft, wodurch der Reibschluß und damit die Klemmbefestigung weiter verbessert werden.

Bevorzugt ist dabei die die Aufnahmebuchse bildende Bohrung mit einer Ringnut versehen, die zum Eingriff der wulstartigen Randabschnitte ausgebildet ist. Hierdurch kann zusätzlich zum Reibschluß auch ein Formschluß zwischen den federnden Laschen und dem Innenumfang der Bohrung erzielt werden, wodurch die zusammengesteckten Abstandhalter durch die so entstehende Clipsverbindung noch sicherer zusammengehalten werden.

Ein bevorzugtes Verfahren zur Montage eines erfindungsgemäßen Scheibentauchkörpers kennzeichnet sich durch die Schritte: a) Bereitstellen teilkreisförmiger Scheibenelemente mit einem Bogenwinkel α für die erste Scheibe; b) Einführen des Steckzapfens eines jeweiligen ersten Abstandhalters von einer Seite der ersten Scheibe jeweils in eines der Montagelöcher; c) Aufsetzen jeweiliger weiterer Abstandhalter von der anderen Seite der ersten Scheibe auf die Steckzapfen der bereits vorhandenen Abstandhalter, so daß der Steckzapfen eines vorhandenen Abstandhalters in die Aufnahmebuchse eines weiteren Abstandhalters eingreift, wobei die Scheibe am Umfangsrand eines jeweiligen Montagelochs zwischen dem bereits vorhandenen Abstandhalter und dem weiteren Abstandhalter eingefaßt wird; d) Aufsetzen teilkreisförmiger Scheibenelemente zur Bildung einer weiteren Scheibe auf die mit der vorhandenen Scheibe verbundenen Abstandhalter derart, daß die Scheibenelemente der weiteren Scheibe gegenüber den Scheibenelementen der vorhandenen Scheibe um einen Winkel β < α in Umfangsrichtung versetzt angeordnet sind und daß die Steckzapfen in die Montagelöcher der weiteren Scheibe eingeführt werden und diese durchgreifen; e) Wiederholen der c) und d) bis die gewünschte Anzahl von Scheiben erreicht ist; f) Fixieren der letzten Scheibe durch nochmaliges Durchführen des Schrittes c); g) Hindurchstecken von Zugstangen durch die jeweils miteinander verbundenen Abstandhalter und h) Verspannen der Scheiben gegeneinander mittels der Zugstangen.

Dieses Verfahren erlaubt einen schnellen und für die beteiligten Monteure sicheren Zusammenbau eines Scheibentauchkörpers, ohne daß die Monteure während des Einsetzens der Scheibenelemente durch bereits an ihrer Position befindliche Zugstangen gefährdet werden und ohne daß ein aufwendiges Einfädeln von Zustangen in zugeordnete Montagelöcher in den Scheiben erforderlich ist.

Die Erfindung wird nachfolgend anhand eines Beispiels unter Bezugnahme auf die Zeichnung näher erläutert; in dieser zeigt:
- **Fig. 1.**: ein halbkreisförmiges Scheibenelement in der Draufsicht;
- **Fig. 2.**: eine schematische Perspektivansicht eines Scheibentauchkörper-Abschnitts mit axial auseinandergezogenen Scheiben und
- **Fig. 3**.: einen Schnitt durch mehrere ineinandergesteckte Abstandhalter im montierten Zustand.

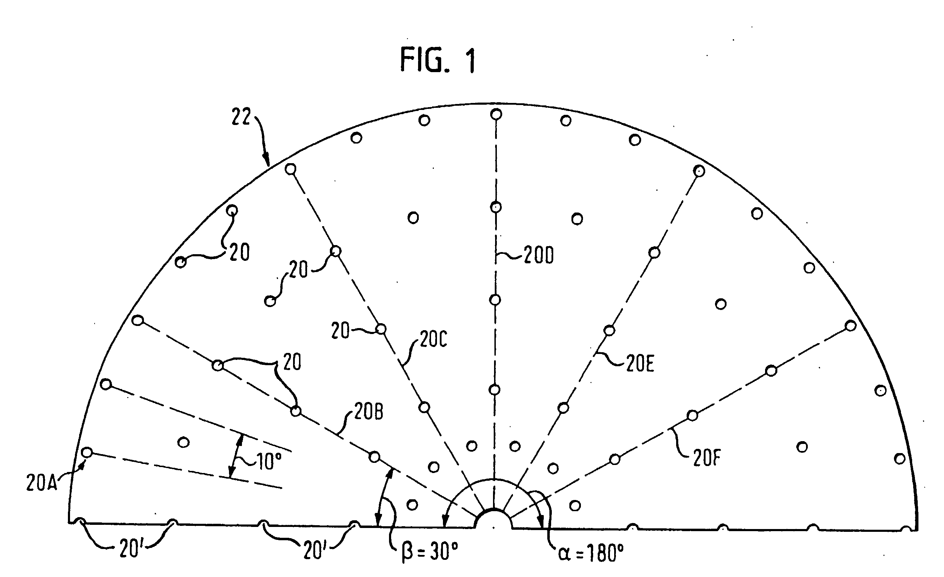

In Fig. 1 ist ein halbkreisförmiges Scheibenelement 22 dargestellt, dessen Bogenwinkel α somit 180° beträgt. Das halbkreisförmige Scheibenelement 22 ist mit einer Vielzahl von Montagelöchern 20 versehen. Die Montagelöcher 20 sind in unterschiedlichen Gruppen angeordnet. Eine erste Gruppe 20A von Montagelöchern 20 ist entlang des gekrümmten Umfangsrandes des Scheibenelements 22 in Randnähe vorgesehen, wobei der Abstand zwischen zwei benachbarten Montagelöchern 20 der Gruppe 20A einem Bogenwinkel von 10° entspricht. Selbstverständlich kann auch eine andere Winkelteilung vorgesehen sein.

Weitere Gruppen 20B, 20C, 20D, 20E, 20F von Montagelöchern 20 bilden jeweils eine Reihe von auf einem gemeinsamen Radius angeordneten Montagelöchern 20. Diese radialen Gruppen 20B, 20C, 20D, 20E, 20F von Montagelöchern 20 sind jeweils in Umfangsrichtung voneinander beabstandet in einem Bogenwinkel von 30° angeordnet, was in Fig. 1 durch gestrichelte Linien symbolisiert ist. Dieser Winkel von 30° zwischen zwei benachbarten radialen Gruppen von Montagelöchern entspricht dem Teilungswinkel β , der eine in Umfangsrichtung winkelversetzte Montage der übereinander gelegenen Scheibenelemente ermöglicht. Selbstverständlich ist außer einem Teilungswinkel von 30° auch jeder andere Teilungswinkel möglich, solange sich hierdurch die radialen Gruppen von Montagelöchern in gleichmäßigen Winkelabständen über den Umfang des Scheibenelement verteilen lassen.

Zusätzlich zu der am Umfangsrand angeordneten Gruppe 20A von Montagelöchern 20 und den radialen Gruppen 20B, 20C, 20D, 20E, 20F von Montagelöchern 20 können noch weitere Montagelöcher im Scheibenelement vorgesehen sein, wobei diese bevorzugt in Gruppen angeordnet sind, die auf einem radialen Strahl gelegen sind, der den Winkel β halbiert oder drittelt.

An den radialen Kanten des Scheibenelements 22 sind zudem halbkreisförmige Ausnehmungen 20' vorgesehen, die zusammen mit entsprechenden halbkreisförmigen Ausnehmungen eines benachbarten Scheibenelements ebenfalls Montagelöcher bilden, in die jeweils ein Abstandhalter einsetzbar ist.

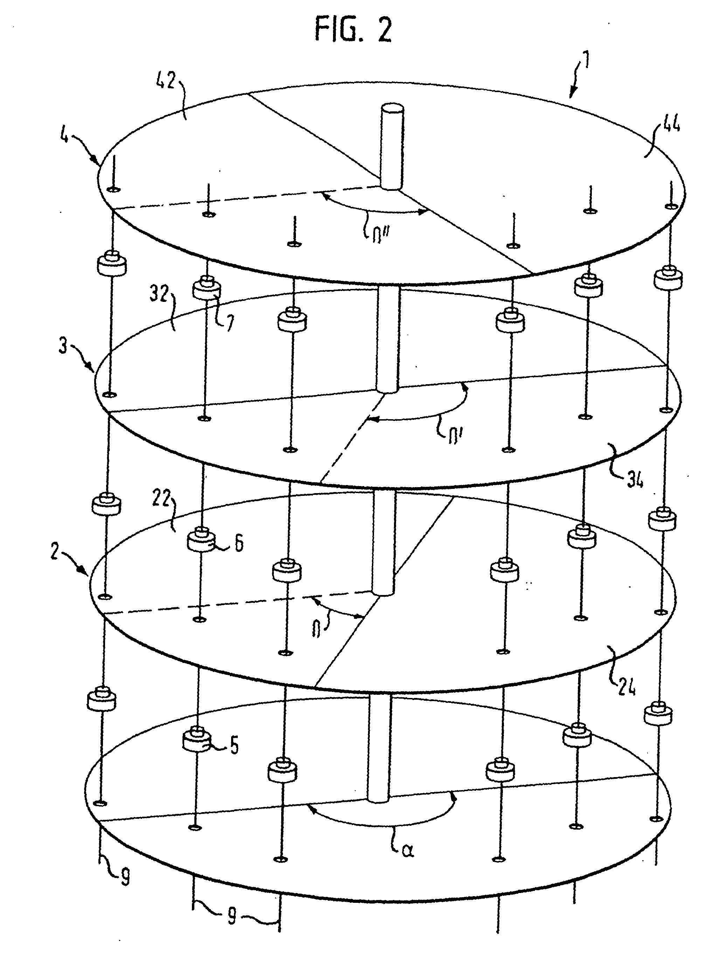

Fig. 2 zeigt einen Ausschnitt eines Scheibentauchkörpers mit übereinander angeordneten Scheiben 2, 3, 4, die jedoch in Axialrichtung auseinandergezogen dargestellt sind, um den Aufbau zu verdeutlichen. In dieser Darstellung ist zu erkennen, daß die Scheiben 2, 3, 4 jeweils aus zwei halbkreisförmigen Scheibenelementen 22, 24, 32, 34, 42, 44 zusammengesetzt sind. Weiterhin ist in Fig. 2 zu sehen, daß jeweils zwei übereinander gelegene Scheiben 2 und 3 beziehungsweise 3 und 4 jeweils so montiert sind, daß die jeweiligen halbkreisförmigen Scheibenelemente 22, 24 und 32, 34 beziehungsweise 32, 34 und 42, 44 um einen Winkel β in Umfangsrichtung gegenüber den Scheibenelementen der benachbarten Scheibe verdreht sind. Um zu verdeutlichen, daß der Winkel β nicht unbedingt gleich bleiben muß, sind in Fig. 2 die Scheiben um unterschiedliche Winkel β , β', β" jeweils zueinander verdreht. Bevorzugt wird jedoch innerhalb eines Scheibentauchkörpers ein gleichmäßiger Winkel β gewählt, um den benachbarte Scheiben jeweils zueinander versetzt sind. Diese versetzte Anordnung gestattet es, bereits nach der Montage von zwei Scheiben einen in sich stabilen Scheibentauchkörper zu erhalten, dessen Montage ohne anfänglich eingesetzte Zugstangen durchgeführt und vervollständigt werden kann.

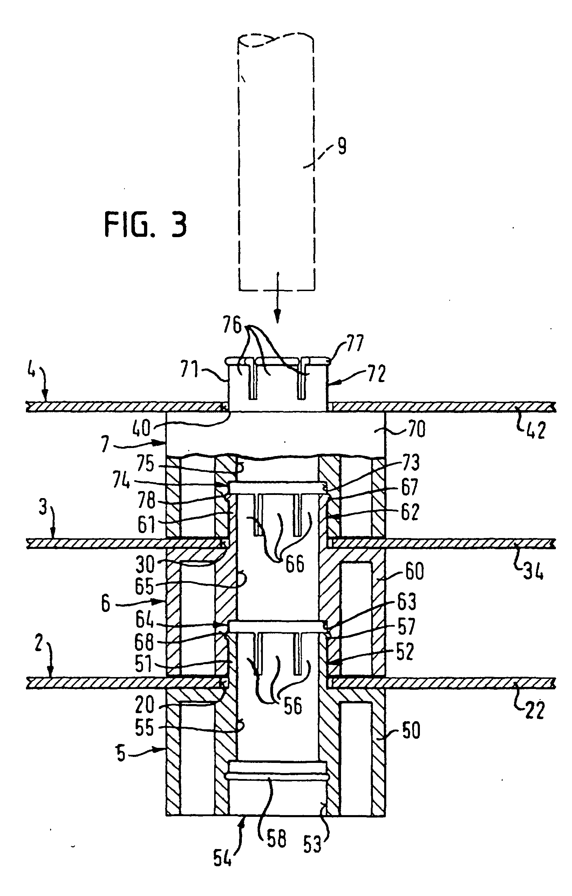

Die Montage der benachbarten Scheiben wird anhand der Fig. 3 erläutert. Ein erster Abstandhalter 5, der aus einem zylindrischen Distanzhalteabschnitt 50 und einem daraus in Axialrichtung nach oben hervorstehenden Vorsprung 51 besteht, welcher einen Steckzapfen 52 zum Formschluß mit einem benachbarten Abstandhalter 6 bildet, weist eine zentrale Durchgangsbohrung 55 auf, die sich in Axialrichtung des Abstandhalters 5 durch diesen hindurch erstreckt. Im unteren, vom Vorsprung 51 abgewandten Bereich des Distanzhalteabschnitts 50 erweitert sich die zentrale Bohrung 55 stufenartig in Radialrichtung und bildet auf diese Weise eine als Aufnahmebuchse 54 für den Steckzapfen eines daruntergelegenen Abstandhalters dienende erweiterte Bohrung 53.

Der Steckzapfen ist in seinem oberen Bereich in Axialrichtung geschlitzt ausgebildet, wodurch federnde Laschen 56 am freien Ende des Steckzapfens 52 gebildet sind. Im Bereich des Umfangs des Steckzapfens 52 sind die federnden Laschen 56 mit einem radial nach außen hervorstehenden wulstartigen Randabschnitt 57 versehen, der ausgebildet ist, um in eine Ringnut 68 der die Aufnahme 64 bildenden Bohrung 63 eines darüber gelegenen Abstandhalters 6 federnd einzurasten. Auch die die Aufnahmebuchse 54 bildende Bohrung 53 des Abstandhalters 5 ist mit einer derartigen Ringnut 58 versehen.

Die beiden in Fig. 3 ebenfalls dargestellten Abstandhalter 6 und 7 sind genauso aufgebaut, wie der vorstehend beschriebene Abstandhalter 5, so daß auf eine detaillierte Beschreibung der Abstandhalter 6 und 7 verzichtet wird. Die einzelne Elemente der Abstandhalter 6 und 7 angebenden Bezugszeichen entsprechen den in Verbindung mit dem Abstandhalter 5 angegebenen Bezugszeichen, sind jedoch jeweils um den Wert 10 beziehungsweise 20 erhöht, so bezeichnet etwa das Bezugszeichen 67 den wulstartigen Randabschnitt der federnden Laschen 66 im Bereich des Umfangs des Steckzapfens 62 des Abstandhalters 6 und das Bezugszeichen 77 bezeichnet den wulstartigen Randabschnitt der federnden Laschen 76 im Bereich des Umfangs des Steckzapfens 72 des Abstandhalters 7.

Der untere Abstandhalter 5 wird mit seinem Steckzapfen 52 von unten durch ein Montageloch 20 der Scheibe 2 hindurchgeführt. Anschließend wird der Abstandhalter 6 von oben derart auf den Steckzapfen 52 des unteren Abstandhalters 5 aufgesetzt, daß der Steckzapfen 52 in die die Aufnahmebuchse 64 bildende Bohrung 63 im unteren Teil des Distanzhalteabschnitts 60 des Abstandhalters 6 eindringt bis der wulstartige Randabschnitt 56 des Steckzapfens 52 des unteren Abstandhalters 5 in die Ringnut 68 in der Aufnahmebuchse 64 des Distanzhalters 6 federnd einrastet. Dabei wird der Rand des Montagelochs 20 der Scheibe 2 zwischen dem unteren Abstandhalter 5 und dem darüber gelegenen Abstandhalter 6 eingeklemmt oder zumindest bündig umgriffen.

Auf den Abstandhalter 6 wird jetzt - in Umfangsrichtung zum Scheibenelement 22 versetzt - das darüber anzuordnende Scheibenelement 34 der Scheibe 3 aufgesetzt, wobei der Steckzapfen 62 des Abstandhalters 6 von unten in die Montagebohrung 30 eingreift und diese nach oben durchdringt. Anschließend wird der Abstandhalter 7, wie vorstehend in Bezug auf den Abstandhalter 6 beschrieben, auf den Steckzapfen 62 des Abstandhalters 6 aufgeschoben, um das Scheibenelement 34 der Scheibe 3 zwischen den Abstandhaltern 6 und 7 zu fixieren. Nachdem auf diese Weise auch das andere Scheibenelement 32 der Scheibe 3 montiert worden ist, wird auf den Abstandhalter 7 anschließend das darüber anzuordnende Scheibenelement 42 der Scheibe 4 gelegt, wobei auch hier wieder der Steckzapfen 72 des Abstandhalters 7 das Montageloch 40 von unten durchdringt. Diese Schritte werden so lange fortgeführt, bis alle Scheiben montiert sind, wobei auch die oberste Scheibe noch mit einem auf den darunter gelegenen Abstandhalter aufgesetzten Abstandhalter fixiert wird.

Sind alle Abstandhalter und alle Scheiben montiert, so werden die Zustangen 9 in die aus den axialen Bohrungen 55, 65, 75 der übereinander liegenden Abstandhalter 5, 6, 7 gebildete Durchgangsbohrung eingeführt. In Fig. 3 ist dieser Einführvorgang durch den vertikalen Pfeil unterhalb der gestrichelt gezeigten Zugstange 9 symbolisiert, wobei die Zugstange 9 selbstverständlich auch von unten eingeführt werden kann.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Scheibentauchkörper
- 2: Scheiben
- 3: Scheiben
- 4: Scheiben
- 5: Abstandhalter
- 6: Abstandhalter
- 7: Abstandhalter
- 9: Zugstangen
- 20: Montagelöcher
- 20': halbkreisförmige Ausnehmung
- 20A: Gruppe von Montagelöchern
- 20B: Gruppe von Montagelöchern
- 20C: Gruppe von Montagelöchern
- 20D: Gruppe von Montagelöchern
- 20E: Gruppe von Montagelöchern
- 20F: Gruppe von Montagelöchern
- 22: teilkreisförmige Scheibenelemente
- 24: teilkreisförmige Scheibenelemente
- 30: Montagelöcher
- 32: teilkreisförmige Scheibenelemente
- 34: teilkreisförmige Scheibenelemente
- 40: Montagelöcher
- 42: teilkreisförmige Scheibenelemente
- 44: teilkreisförmige Scheibenelemente
- 50: Distanzhalteabschnitt
- 52: Steckzapfen
- 53: Bohrung
- 54: Aufnahmebuchse
- 55: axial durchdringende Bohrung
- 56: federnde Laschen
- 57: wulstartiger Randabschnitt
- 58: Ringnut
- 60: Distanzhalteabschnitt
- 62: Steckzapfen
- 63: Bohrung
- 64: Aufnahmebuchse
- 65: axial durchdringende Bohrung
- 66: federnde Laschen
- 67: wulstartiger Randabschnitt
- 68: Ringnut
- 70: Distanzhalteabschnitt
- 72: Steckzapfen
- 73: Bohrung
- 74: Aufnahmebuchse
- 75: axial durchdringende Bohrung
- 76: federnde Laschen
- 77: wulstartiger Randabschnitt
- 78: Ringnut

## Patentansprüche

1. Scheibentauchkörper (1) mit einer Welle (10) und einer Vielzahl von auf der Welle (10) angeordneten, aus teilkreisförmigen Scheibenelementen (22, 24, 32, 34, 42, 44) gebildeten kreisförmigen Scheiben (2, 3, 4), wobei Zugstangen (9) vorgesehen sind, die die Scheiben (2, 3, 4) in achsparalleler Richtung durchdringen und gegeneinander verspannen, wobei zwischen einander in Axialrichtung des Scheibentauchkörpers benachbarten Scheiben (2, 3, 4) Abstandhalter (5, 6, 7) vorgesehen sind, die an einer ersten Seite mit einem Steckzapfen (52, 62, 72) versehen sind und die an einer von dieser ersten Seite abgewandten zweiten Seite eine Aufnahmebuchse (54, 64, 74) zur Aufnahme eines Steckzapfens (52, 62, 72) eines in Axialrichtung benachbarten Abstandhalters (5, 6, 7) aufweisen, und wobei durch die Abstandhalter (5, 6, 7) die Zugstangen (9) hindurchführbar sind,
**dadurch gekennzeichnet,**
**daß** die teilkreisförmigen Scheibenelemente (22, 24, 32, 34, 42, 44) einen Bogenwinkel α mit 0°<α≤180° aufweisen,
**daß** die Scheibenelemente (22, 24, 32, 34, 42, 44) von einander in Axialrichtung benachbarten Scheiben (2, 3, 4) jeweils um einen Winkel β mit 0°<β <α in Umfangsrichtung versetzt zueinander angeordnet sind und
**daß** die Scheibenelemente (22, 24, 32, 34, 42, 44) Montagelöcher (20, 30, 40) aufweisen, durch die jeweils ein Steckzapfen (52, 62, 72) eines Abstandhalters (5, 6, 7) hindurchführbar ist.

2. Scheibentauchkörper nach Anspruch 1,
**dadurch gekennzeichnet,**
**daß** die Scheibenelemente halbkreisförmig (α =180°) sind.

3. Abstandhalter (5, 6, 7) für einen Scheibentauchkörper (1) nach Anspruch 1 oder 2
mit einem Distanzhalteabschnitt (50, 60, 70), einem an einer ersten Seite des Distanzhalteabschnitts (50, 60, 70) ausgebildeten Vorsprung (51, 61, 71), der den Steckzapfen (52, 62, 72) bildet, und einer an der von der ersten Seite abgewandten zweiten Seite des Distanzhalteabschnitts (50, 60, 70) ausgebildeten Bohrung (53, 63, 73), die die Aufnahmebuchse (54, 64, 74) bildet, wobei die Bohrung (53, 63, 73) im Distanzhalteabschnitt (50, 60, 70) in eine den Steckzapfen (52, 62, 72) axial durchdringende Bohrung (55, 65, 75) übergeht, so daß eine Durchgangsbohrung durch den Abstandhalter (5, 6, 7) geschaffen ist,
**dadurch gekennzeichnet,**
**daß** der Steckzapfen (52, 62, 72) mit in Radialrichtung federnden Laschen (56, 66, 76) versehen ist.

4. Abstandhalter nach Anspruch 3,
**dadurch gekennzeichnet, daß** die federnden Laschen (56, 66, 76) im Bereich des Umfangs des Steckzapfens (52, 62, 72) mit einem radial nach außen hervorstehenden wulstartigen Randabschnitt (57, 67, 77) versehen sind.

5. Abstandhalter nach Anspruch 4,
**dadurch gekennzeichnet, daß** die die Aufnahmebuchse (54, 64, 74) bildende Bohrung (53, 63, 73) mit einer Ringnut (58, 68, 78) versehen ist, die zum Eingriff der wulstartigen Randabschnitte (56, 66, 76) ausgebildet ist.

6. Verfahren zur Montage eines in Anspruch 1 oder 2 angegebenen Scheibentauchkörpers **gekennzeichnet durch** die Schritte:
a) Bereitstellen teilkreisförmiger Scheibenelemente (22, 24) mit einem Bogenwinkel α für die erste Scheibe (2) ;
b) Einführen des Steckzapfens (52) eines jeweiligen ersten Abstandhalters (5) von einer Seite der ersten Scheibe (2) jeweils in eines der Montagelöcher (20);
c) Aufsetzen jeweiliger weiterer Abstandhalter (6) von der anderen Seite der ersten Scheibe (2) auf die Steckzapfen (52) der bereits vorhandenen Abstandhalter (5), so daß der Steckzapfen (52) eines vorhandenen Abstandhalters (5) in die Aufnahmebuchse (64) eines weiteren Abstandhalters (6) eingreift, wobei die Scheibe (2) am Umfangsrand eines jeweiligen Montagelochs (20) zwischen dem bereits vorhandenen Abstandhalter (5) und dem weiteren Abstandhalter (6) eingefaßt wird;
d) Aufsetzen teilkreisförmiger Scheibenelemente (32, 34) zur Bildung einer weiteren Scheibe (3) auf die mit der vorhandenen Scheibe (2) verbundenen Abstandhalter (6) derart, daß die Scheibenelemente (32, 34) der weiteren Scheibe gegenüber den Scheibenelementen (22, 24) der vorhandenen Scheibe um einen Winkel β < α in Umfangsrichtung versetzt angeordnet sind und daß die Steckzapfen (62) in die Montagelöcher (30) der weiteren Scheibe (3) eingeführt werden und diese durchgreifen;
e) Wiederholen der Schritte c) und d) bis die gewünschte Anzahl von Scheiben erreicht ist;
f) Fixieren der letzten Scheibe **durch** nochmaliges Durchführen des Schrittes c);
g) Hindurchstecken von Zugstangen (9) **durch** die jeweils miteinander verbundenen Abstandhalter (5, 6, 7) und
h) Verspannen der Scheiben (2, 3, 4) gegeneinander mittels der Zugstangen (9).

## Claims

1. A disc immersion body (1) comprising a shaft (10) and a plurality of circular discs (2, 3, 4) formed by particular disc elements (22, 24, 32, 34, 42, 44), wherein tie-rods (9) are provided, which penetrate the discs (2, 3, 4) in paraxial direction and brace them relative to one another, wherein provided between discs (2, 3, 4) that are mutually adjacent in axial direction of the disc immersion body are spacers (5, 6, 7), which at a first side are provided with a plug-in spigot (52, 62, 72) and which at a second side remote from said first side have a receiving bush (54, 64, 74) for receiving a plug-in spigot (52, 62, 72) of an axially adjacent spacer (5, 6, 7), and wherein the tie-rods (9) are introducible through the spacers (5, 6, 7),
**characterized in**
**that** the part circular disc elements (22, 24, 32, 34, 42, 44) have an arc angle α of 0° < α ≤ 180°,
**that** the disc elements (22, 24, 32, 34, 42, 44) of axially mutually adjacent discs (2, 3, 4) are arranged mutually offset in each case by an angle β of 0° < β < α in peripheral direction and
**that** the disc elements (22, 24, 32, 34, 42, 44) have assembly holes (20, 30, 40), through each of which a plug-in spigot (52, 62, 72) of a spacer (5, 6, 7) is introducible.

2. A disc immersion body according to claim 1,
**characterized in**
**that** the disc elements are semi-circular (α = 180°).

3. Spacer (5, 6, 7) for a disc immersion body (1) according to claim 1 or 2
comprising a distance portion (50, 60, 70), a projection (51, 61, 71) constructed at a first side of the distance portion (50, 60, 70) and forming the plug-in spigot (52, 62, 72), and a bore (53, 63, 73) constructed at the second side of the distance portion (50, 60, 70) remote from the first side and
forming the receiving bush (54, 64, 74), wherein the bore (53, 63, 73) in the distance portion (50, 60, 70) merges into a bore (55, 65, 75) axially penetrating the plug-in spigot (52, 62, 72), thereby creating a continuous bore through the spacer (5, 6, 7),
**characterized in**
**that** the plug-in spigot (52, 62, 72) is provided with radially resilient lugs (56, 66, 76).

4. Spacer according to claim 3,
**characterized in**
**that** the resilient lugs (56, 66, 76) are provided with a radially outwardly projecting bead-like edge portion (57, 67, 77) in the region of the periphery of the plug-in spigot (52, 62, 72).

5. Spacer according to claim 4,
**characterized in**
**that** the bore (53, 63, 73) forming the receiving bush (54, 64, 74) is provided with an annular groove (58, 68, 78), which is designed for engagement of the bead-like edge portions (56, 66, 76).

6. Method of assembling a disc immersion body according to claim 1 or 2
**characterized by** the steps:
a) provision of part-circular disc elements (22, 24) having an arc angle α for the first disc (2);
b) introduction of the plug-in spigot (52) of a first spacer (5) from one side of the first disc (2) into each one of the assembly holes (20);
c) placing of further spacers (6) from the other side of the first disc (2) onto the plug-in spigots (52) of each of the already provided spacers (5), so that the plug-in spigot (52) of a provided spacer (5) engages into the receiving bush (64) of a further spacer (6), wherein the disc (2) is enclosed at the peripheral edge of each assembly hole (20) between the already provided spacer (5) and the further spacer (6);
d) placing of particular disc elements (32, 34) for forming a further disc (3) onto the spacers (6) connected to the existing disc (2) in such a way that the disc elements (32, 34) of the further disc are arranged offset by an angle β < α in peripheral direction relative to the disc elements (22, 24) of the provided disc and that the plug-in spigots (62) are introduced into and engage through the assembly holes (30) of the further disc (3);
e) repeating steps c) and d) until the desired number of discs is attained;
f) fixing the last disc by carrying out step c) once more;
g) inserting of tie-rods (9) through the mutually connected spacers (5, 6, 7) in each case and
h) brace the discs (2, 3, 4) relative to one another by means of the tie-rods (9).

## Revendications

1. Corps immergé à disques (1), comportant un arbre (10) et une multitude de disques circulaires (2, 3, 4) agencés sur l'arbre (10) et formés par des éléments en disque (22, 24, 32, 34, 42, 44) en forme de cercle partiel, dans lequel sont prévues des barres de traction (9) traversent les disques (2, 3, 4) en direction parallèle à l'axe et qui les serrent les uns contre les autres, des éléments écarteurs (5, 6, 7) étant prévus entre des disques (2, 3, 4) mutuellement voisins en direction axiale du corps immergé à disques, éléments qui sont pourvus d'un tenon d'enfichage (52, 62, 72) sur un premier côté et qui présentent sur un deuxième côté détourné de ce premier côté une douille de réception (54, 64, 74) pour recevoir un tenon d'enfichage (52, 62, 72) d'un élément écarteur (5, 6, 7) voisin en direction axiale, les barres de traction (9) pouvant traverser les éléments écarteurs (5, 6, 7),
**caractérisé en ce que**
les éléments en disque (22, 24, 32, 34, 42, 44) en forme de cercle partiel présentent un angle d'arc α tel que 0° < α ≤ 180°, **en ce que** les éléments en disque (22, 24, 32, 34, 42, 44) appartenant à des disques (2, 3, 4) mutuellement voisins en direction axiale sont agencés décalés en direction périphérique respectivement d'un angle β tel que 0° < β < α, et **en ce que** les éléments en disque (22, 24, 43, 34, 42, 44) présentent des trous de montage (20, 30, 40) qui peuvent être traversés chacun par un tenon d'enfichage (52, 62, 72) d'un élément écarteur (5, 6, 7).

2. Corps immergé à disques selon la revendication 1, **caractérisé en ce que** les éléments en disque sont en forme de demi-cercle (α = 180°).

3. Élément écarteur (5, 6, 7) pour un corps immergé à disques (1) selon l'une ou l'autre des revendications 1 et 2, comportant un tronçon d'élément écarteur (50, 60, 70), une saillie (51, 61, 71) réalisée sur un premier côté du tronçon d'élément écarteur (50, 60, 70) et formant le tenon d'enfichage (52, 62, 72), et un perçage (53, 63, 73) ménagé sur un deuxième côté, détourné du premier côté, du tronçon d'élément écarteur (50, 60, 70) et formant la douille de réception (54, 64, 74), le perçage (53, 63, 73) se transformant, dans le tronçon d'élément écarteur (50, 60, 70), en un perçage (55, 65, 75) traversant axialement le tenon d'enfichage (52, 62, 72), de sorte qu'un perçage traversant est ménagé à travers l'élément écarteur (5, 6, 7),
**caractérisé en ce que** le tenon d'enfichage (52, 62, 72) est pourvu de pattes (56, 66, 76) élastiques en direction radiale.

4. Élément écarteur selon la revendication 3, **caractérisé en ce que** dans la zone du pourtour du tenon d'enfichage (52, 62, 72), les pattes élastiques (56, 66, 76) sont pourvues d'un tronçon de bord (57, 67, 77) en forme de bourrelet faisant saillie radialement vers l'extérieur.

5. Élément écarteur selon la revendication 4, **caractérisé en ce que** le perçage (53, 63, 73) formant la douille de réception (54, 64, 74) est pourvu d'une gorge annulaire (58, 68, 78) qui est réalisée pour l'engagement des tronçons de bord (56, 66, 76) en forme de bourrelet.

6. Procédé pour le montage d'un corps immergé à disques selon l'une des revendications 1 et 2, **caractérisé par** les étapes suivantes :
a) on fournit des éléments en disque (22, 24) en forme de cercle partiel présentant un angle d'arc α pour le premier disque (2) ;
b) on introduit le tenon d'enfichage (52) d'un premier élément écarteur respectif (5) depuis un côté du premier disque (2) dans l'un des trous de montage (20) ;
c) on pose d'autres éléments écarteurs respectifs (6) depuis l'autre côté du premier disque (2) sur les tenons d'enfichage (52) des éléments écarteurs (5) qui y sont déjà agencés, de sorte que le tenon d'enfichage (52) d'un élément écarteur (5) présent s'engage dans la douille de réception (64) d'un autre élément écarteur (6), le disque (2) étant pris au niveau du bord périphérique d'un trou de montage respectif (20) entre l'élément écarteur (5) présent et l'autre élément écarteur (6) ;
d) on pose des éléments en disque (32, 34) en forme de cercle partiel destinés à former un autre disque (3) sur les éléments écarteurs (6) reliés au disque présent (2), de telle sorte que les éléments en disque (32, 34) de l'autre disque sont agencés en décalage d'un angle β < α en direction périphérique par rapport aux éléments en disque (22, 24) du disque présent, et en ce que les tenons d'enfichage (62) sont introduits dans les trous de montage (30) de l'autre disque (3) et traversent celui-ci ;
e) on répète les étapes c) et d) jusqu'à obtenir le nombre désiré de disques ;
f) on fixe le dernier disque en exécutant encore une fois l'étape c) ;
g) on fait passer les barres de traction (9) à travers les éléments écarteurs respectifs (5, 6, 7) reliés entre eux ; et
h) on serre les disques (2, 3, 4) les uns contre les autres au moyen des barres de traction (9).
